(19) Europäisches Patentamt
European Patent Office
Office européen des brevets

(11) **EP 4 250 728 A1**

(12) **EUROPEAN PATENT APPLICATION**
published in accordance with Art. 153(4) EPC

(43) Date of publication:
**27.09.2023 Bulletin 2023/39**

(21) Application number: **21909852.2**

(22) Date of filing: **28.09.2021**

(51) International Patent Classification (IPC):
**H04N 19/13** *(2014.01)*        **H04N 19/136** *(2014.01)*
**H04N 19/18** *(2014.01)*

(52) Cooperative Patent Classification (CPC):
**H04N 19/13; H04N 19/136; H04N 19/18**

(86) International application number:
**PCT/JP2021/035556**

(87) International publication number:
**WO 2022/137694 (30.06.2022 Gazette 2022/26)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **25.12.2020   JP 2020217767**

(71) Applicant: **KDDI Corporation
Tokyo 163-8003 (JP)**

(72) Inventors:
• **KAWAMURA, Kei
  Fujimino-shi, Saitama 356-8502 (JP)**
• **UNNO, Kyohei
  Fujimino-shi, Saitama 356-8502 (JP)**

(74) Representative: **Fink Numrich
Patentanwälte PartmbB
Paul-Gerhardt-Allee 24
81245 München (DE)**

(54) **IMAGE DECODING DEVICE, IMAGE DECODING METHOD, AND PROGRAM**

(57)    An image decoding device 200 includes: a local addition unit 104a that adds level values of decoded residual coefficients existing around a residual coefficient to be decoded and derives a sum total value of level; a transform unit 104b that transforms the sum total value of level into an amount of shift and an index; a table ref- erence unit 104c that refers to a predefined table and outputs a pre-correction Rice parameter corresponding to the index; and a correction unit 104d that derives a post-correction Rice parameter on the basis of the pre-correction Rice parameter and the amount of shift.

FIG. 3

EP 4 250 728 A1

**Description**

TECHNICAL FIELD

The present invention relates to an image decoding device, an image decoding method, and a program.

BACKGROUND ART

A moving image coding system using intra-prediction or inter-prediction, and transform/quantization and entropy coding of a prediction residual signal has been proposed (for example, Non-Patent Literature 1).
Non-Patent Literature 1 discloses applying a Golomb-Rice code to coding of a residual coefficient. Here, two types, normal residual coding and transform skip residual coding, are defined as the coding of a residual coefficient.
In normal residual coding, it is prescribed that, with reference to a predefined table, a Rice parameter is derived on the basis of the magnitudes of surrounding coded coefficients.
On the other hand, in transform skip residual coding, it is prescribed that the Rice parameter is always 1.
Here, in Non-Patent Literature 1, the method for deriving a Rice parameter is set on the assumption of the tendency of general coefficient distributions obtained in a case where various quantization parameters are applied to 8-bit video or 10-bit video.

CITATION LIST

NON PATENT LITERATURE

Non patent Literature 1: ITU-T H.266 Versatile Video Coding

SUMMARY OF INVENTION

TECHNICAL PROBLEM

However, the Rice parameter is different from the assumed tendency in a case where the bit depth is deep or the quantization parameter is small; therefore, the prescription in Non-Patent Literature 1 described above has a problem that coding performance is reduced because an appropriate Rice parameter is not selected.
Thus, the present invention has been made in view of the above-described problem, and an object of the present invention is to provide an image decoding device, an image decoding method, and a program capable of deriving a Rice parameter suitable for distribution of residual coefficients to be generated and improving coding performance even in a case where the bit depth is deep or the quantization parameter is small.

SOLUTION TO PROBLEM

The first aspect of the present invention is summarized as an image decoding device configured to decode coded data, the image decoding device including: a local addition unit that adds level values of decoded residual coefficients existing around a residual coefficient to be decoded and derives a sum total value of level; a transform unit that transforms the sum total value of level into an amount of shift and an index; a table reference unit that refers to a predefined table and outputs a pre-correction Rice parameter corresponding to the index; and a correction unit that derives a post-correction Rice parameter on the basis of the pre-correction Rice parameter and the amount of shift.
The second aspect of the present invention is summarized as an image decoding method for decoding coded data, the image decoding method including: a step of adding level values of decoded residual coefficients existing around a residual coefficient to be decoded and deriving a sum total value of level; a step of transforming the sum total value of level into an amount of shift and an index; a step of referring to a predefined table and outputting a pre-correction Rice parameter corresponding to the index; and a step of deriving a post-correction Rice parameter on the basis of the pre-correction Rice parameter and the amount of shift.
The third aspect of the present invention is summarized as a program for causing a computer to function as an image decoding device, wherein the image decoding device includes: a local addition unit that adds level values of decoded residual coefficients existing around a residual coefficient to be decoded and derives a sum total value of level; a transform unit that transforms the sum total value of level into an amount of shift and an index; a table reference unit that refers to a predefined table and outputs a pre-correction Rice parameter corresponding to the index; and a correction unit that derives a post-correction Rice parameter on the basis of the pre-correction Rice parameter and the amount of shift.

ADVANTAGEOUS EFFECTS OF INVENTION

According to the present invention, it is possible to provide an image decoding device, an image decoding method, and a program capable of deriving a Rice parameter suitable for distribution of residual coefficients to be generated and improving coding performance even in a case where the bit depth is deep or the quantization parameter is small.

BRIEF DESCRIPTION OF DRAWINGS

Fig. 1 is a diagram illustrating an example of a configuration of an image processing system 1 according to an embodiment.
Fig. 2 is a diagram illustrating an example of functional blocks of an image coding device 100 according to the embodiment.
Fig. 3 is a diagram illustrating an example of some functional blocks of an entropy coding unit 104 of the image coding device 100 and an entropy decoding unit 201 of an image decoding device 200 according to the embodiment.
Fig. 4 is a diagram illustrating an example of a table used by a table reference unit 104c of an entropy coding unit 104 of an image coding device 100 according to an embodiment.
Fig. 5 is a diagram illustrating an example of functional blocks of an image decoding device 200 according to an embodiment.

DESCRIPTION OF EMBODIMENTS

Hereinafter, embodiments of the present invention will be described with reference to the drawings. Note that components in the following embodiments can be replaced with existing components or the like as appropriate, and various variations including combinations with other existing components are possible. Therefore, the following description of the embodiments does not limit the contents of the invention described in the claims.

(First Embodiment)

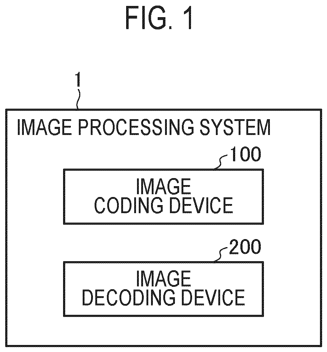

Fig. 1 is a diagram illustrating an example of functional blocks of an image processing system 1 according to a first embodiment of the present invention. The image processing system 1 includes an image coding device 100 that codes a video to generate coded data, and an image decoding device 200 that decodes the coded data generated by the image coding device 100. The above-described coded data is transmitted and received between the image coding device 100 and the image decoding device 200 via a transmission path, for example.

<Image Coding Device 100>

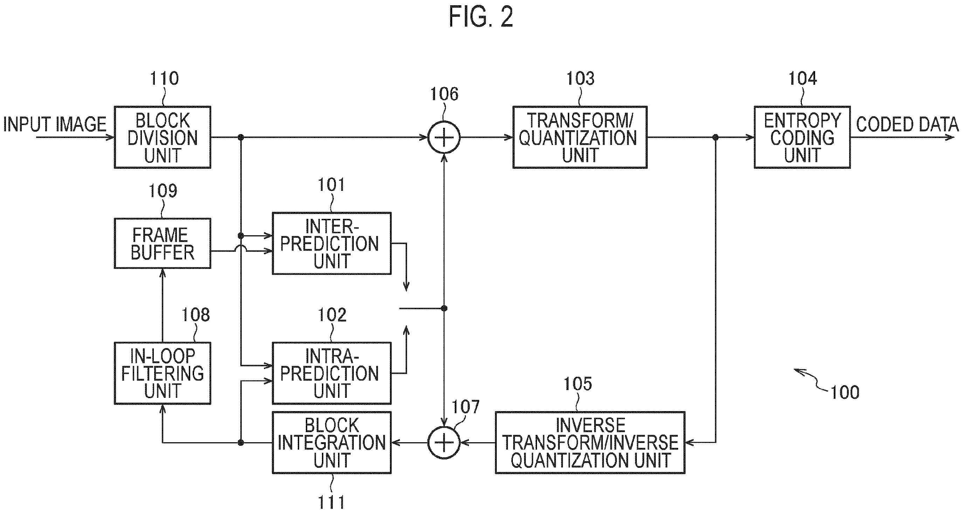

Fig. 2 is a diagram illustrating an example of functional blocks of the image coding device 100. As illustrated in Fig. 2, the image coding device 100 includes an inter-prediction unit 101, an intra-prediction unit 102, a transform/quantization unit 103, an entropy coding unit 104, an inverse transform/inverse quantization unit 105, a subtracting unit 106, an adding unit 107, an in-loop filter unit 108, a frame buffer 109, a block division unit 110, and a block integration unit 111.
The block division unit 110 is configured to divide an entire screen of an input image into the same squares, and output an image (divided image) obtained by recursive division using a quad tree or the like.
The inter-prediction unit 101 is configured to perform inter-prediction by using the divided image input by the block division unit 110 and a locally decoded image after filtering input from the frame buffer 109 to generate and output an inter-prediction image.
The intra-prediction unit 102 is configured to perform intra-prediction by using the divided image input by the block division unit 110 and a locally decoded image before filtering (described later) to generate and output an intra-prediction image.
The transform/quantization unit 103 is configured to execute orthogonal transform processing on a residual signal input from the subtracting unit 106, execute quantization processing on a transform coefficient obtained by the orthogonal transform processing, and output a quantized level value obtained by the quantization processing.
The entropy coding unit 104 is configured to perform entropy coding on the quantized level value, transform unit size, and transform size input from the transform/quantization unit 103 and output coded data.
The inverse transform/inverse quantization unit 105 is configured to execute inverse quantization processing on the quantized level value input from the transform/quantization unit 103, execute inverse orthogonal transform processing on a transform coefficient obtained by the inverse quantization processing, and output an inversely orthogonally transformed residual signal obtained by the inverse orthogonal transform processing.

The subtracting unit 106 is configured to output the residual signal that is a difference between the divided image input by the block division unit 110 and the intra-prediction image or the inter-prediction image.

The adding unit 107 is configured to output a divided image obtained by adding the inversely orthogonally transformed residual signal input from the inverse transform/inverse quantization unit 105 and the intra-prediction image or the inter-prediction image.

The block integration unit 111 is configured to output the locally decoded image before filtering obtained by integrating the divided images input from the adding unit 107.

The in-loop filter unit 108 is configured to apply in-loop filtering processing such as deblocking filter processing to the locally decoded image before filtering input from the block integration unit 111 to generate and output the locally decoded image after filtering. Here, the locally decoded image before filtering is a signal obtained by adding the residual signal subjected to the inverse orthogonal transform and the intra-prediction image or the inter-prediction image.

The frame buffer 109 accumulates the locally decoded image after filtering and appropriately supplies the locally decoded image after filtering to the inter-prediction unit 101 as the locally decoded image after filtering.

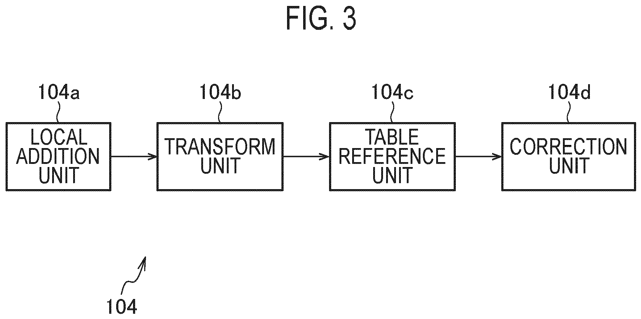

Hereinafter, the entropy coding unit 104 of the image coding device 100 according to the present embodiment will be described with reference to Fig. 3.

Specifically, Fig. 3 is a diagram illustrating an example of a function related to the derivation of a Rice parameter in coding of a residual coefficient in the entropy coding unit 104 of the image coding device 100 according to the present embodiment.

As illustrated in Fig. 3, the entropy coding unit 104 includes a local addition unit 104a, a transform unit 104b, a table reference unit 104c, and a correction unit 104d.

The local addition unit 104a is configured to add the level values of coded residual coefficients existing around the coefficient to be coded and output the sum total value of level locSumAbs.

The transform unit 104b is configured to transform the sum total value of level locSumAbs output by the local addition unit 104a into the amount of shift shiftRice and an index locSumAbsIdx.

For example, the transform unit 104b may be configured to multiply the above-described sum total value of level locSumAbs by 1/8, transform the resulting value into a logarithm with a base of 2, and calculate the maximum integer value not exceeding the logarithm as the amount of shift shiftRice. In such a case, assuming that the sum total value of level locSumAbs is 64, the amount of shift shiftRice is 3.

Further, the transform unit 104b may be configured to calculate the index locSumAbsIdx by (Formula 1) below.

$$\text{locSumAbsIdx} = \text{Clip3}(0, 31, \text{locSumAbs} >> \text{shiftRice}) \ldots (\text{Formula 1})$$

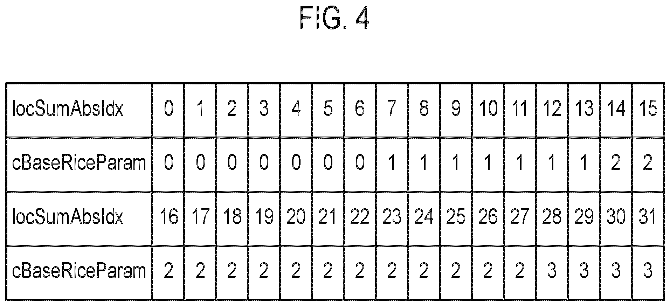

The table reference unit 104c is configured to refer to a predetermined table and output a pre-correction Rice parameter cBaseRicePram corresponding to the index locSumAbsIdx. For example, Table 128 defined in Non-Patent Literature 1 can be used as such a table (see Fig. 4).

The correction unit 104d is configured to output a post-correction Rice parameter cRiceParam on the basis of the pre-correction Rice parameter cBaseRicePram and the amount of shift shiftRice.

For example, the correction unit 104d may be configured to output a post-correction Rice parameter cRiceParam by (Formula 2) below.

$$\text{cRiceParam} = \text{cBaseRicePram} + \text{shiftRice} \ldots (\text{Formula 2})$$

The normal residual coding disclosed in Non-Patent Literature 1 has two types, base-attached residual coding and baseless residual coding. Here, 4 is defined as the base value.

Thus, the local addition unit 104a may be configured to perform correction by subtracting the base value from the level value of a coded residual coefficient existing around the coefficient to be coded.

<Image Decoding Device 200>

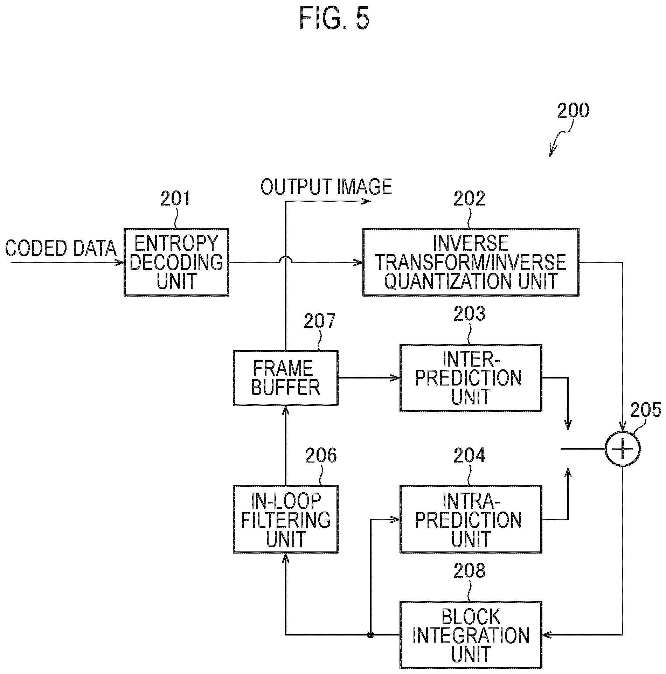

Fig. 5 is a block diagram of an image decoding device 200 according to the present embodiment. As illustrated in Fig. 5, the image decoding device 200 according to the present embodiment includes an entropy decoding unit 201, an inverse transform/inverse quantization unit 202, an inter-prediction unit 203, an intra-prediction unit 204, an addition unit 205, an in-loop filtering unit 206, a frame buffer 207, and a block integration unit 208.

The entropy decoding unit 201 is configured to perform entropy decoding on coded data and output a quantized level value, a motion compensation method generated by the image coding device 100, etc.

The inverse transform/inverse quantization unit 202 is configured to perform inverse quantization processing on a quantized level value input from the entropy decoding unit 201, perform inverse orthogonal transform processing on the result of the inverse quantization processing, and output the result as a residual signal.

The inter-prediction unit 203 is configured to perform inter-prediction by using a locally decoded image after filtering input from the frame buffer 207 to generate and output an inter-prediction image.

The intra-prediction unit 204 is configured to perform intra-prediction by using a locally decoded image before filtering input from the addition unit 205 to generate and output an intra-prediction image.

The addition unit 205 is configured to output a divided image obtained by adding a residual signal input from the inverse transform/inverse quantization unit 202 and a prediction image (an inter-prediction image input from the inter-prediction unit 203 or an intra-prediction image input from the intra-prediction unit 204).

Here, the prediction image is, out of an inter-prediction image input from the inter-prediction unit 203 and an intra-prediction image input from the intra-prediction unit 204, a prediction image calculated by a prediction method obtained by entropy decoding.

The block integration unit 208 is configured to output a locally decoded image before filtering obtained by integrating divided images input from the addition unit 205.

The in-loop filtering unit 206 is configured to apply in-loop filtering processing such as deunit filtering processing to a locally decoded image before filtering input from the block integration unit 208 to generate and output a locally decoded image after filtering.

The frame buffer 207 is configured to accumulate locally decoded images after filtering input from the in-loop filter 206 and to, as appropriate, supply the accumulated data to the inter-prediction unit 203 as locally decoded images after filtering and output the accumulated data as decoded images.

Hereinafter, an example of some functional blocks of the entropy decoding unit 201 of the image decoding device 200 according to the present embodiment will be described with reference to Fig. 3. Specifically, an example of a function related to the derivation of a Rice parameter in decoding of a residual coefficient in the entropy decoding unit 201 of the image decoding device 200 according to the embodiment will be described with reference to Fig. 3.

As illustrated in Fig. 3, similarly to the entropy coding unit 104, the entropy decoding unit 201 includes a local addition unit 104a, a transform unit 104b, a table reference unit 104c, and a correction unit 104d.

Here, the local addition unit 104a in the entropy decoding unit 201 is configured to add the level values of decoded residual coefficients existing around the residual coefficient to be decoded and output the sum total value of level locSumAbs.

Note that the transform unit 104b, the table reference unit 104c, and the correction unit 104d in the entropy decoding unit 201 have the same functions as those of the transform unit 104b, the table reference unit 104c, and the correction unit 104d in the entropy coding unit 104.

According to the present embodiment, in each of normal residual coding and transform skip residual coding, the amount of correction (the amount of shift and the index) of a Rice parameter is derived on the basis of the level values of decoded residual coefficients existing around a coded residual coefficient (or a decoded residual coefficient), and a predefined table (at the time of normal residual coding) or a fixed value (at the time of transform skip residual coding) is corrected according to the amount of correction. As a result, even in a case where the bit depth is deep or the quantization parameter is small, a Rice parameter suitable for distribution of residual coefficients to be generated can be derived, and coding performance can be improved.

(Second Embodiment)

Hereinafter, an image processing system 1 according to a second embodiment of the present invention will be described focusing on differences from the image processing system 1 according to the first embodiment described above.

In the present embodiment, the transform unit 104b may be configured such that, in a case where the above-described sum total value of level locSubAbs is larger than a threshold value, the transform unit 104b derives the above-described amount of shift shiftRice on the basis of the internal processing bit depth of the content.

Specifically, the transform unit 104b may be configured such that, in a case where the above-described sum total value of level locSubAbs is larger than a threshold value, the transform unit 104b outputs, as the above-described amount of shift shiftRice, a value defined by the internal processing bit depth of the content.

For example, in a case where the internal processing bit depth is 10 bits, the above-described value may be 0; in a case where the internal processing bit depth is 11 bits, the above-described value may be 2; in a case where the internal processing bit depth is 12 bits or 13 bits, the above-described value may be 3; and in a case where the internal processing bit depth is 14 bits, 15 bits, or 16 bits, the above-described value may be 4.

Further, the transform unit 104b may be configured such that, in a case where the above-described sum total value of level locSubAbs is larger than a threshold value, the transform unit 104b derives the index locSumAbsIdx on the basis of the level value locSubAbs and the amount of shift shiftRice described above.

Specifically, the transform unit 104b may be configured such that, in a case where the above-described sum total value of level locSubAbs is equal to or larger than a threshold value, the transform unit 104b outputs, as the index locSumAbsIdx, the result of subjecting the above-described level value locSubAbs to a right-shift operation by a number equal to the amount of shift shiftRice. Alternatively, the transform unit 104b may be configured to output the result of a process in which the above-described level value locSubAbs is divided by the result of subjecting 1 to a left-shift operation by a number equal to the amount of shift shiftRice and the resulting value is rounded.

On the other hand, the transform unit 104b may be configured such that, in a case where the above-described sum total value of level locSubAbs is smaller than a threshold value, the transform unit 104b outputs 0 as the amount of shift shiftRice and outputs the above-described sum total value of level locSumAbs as the index locSumAbsIdx.

Here, 32 may be used as the threshold value. Further, the transform unit 104b may be configured to correct the threshold value by adding a base value according to the types of base-attached residual coding and baseless residual coding.

According to the present embodiment, a Rice parameter according to the bit depth of the content (video container) can be derived, and coding performance can be improved.

(Third Embodiment)

Hereinafter, with reference to Fig. 6, an image processing system 1 according to a third embodiment of the present invention will be described focusing on differences from the image processing systems 1 according to the first embodiment and the second embodiment described above.

In the present embodiment, the correction unit 104d may be used to derive a Rice parameter in transform skip residual coding. That is, in Non-Patent Literature 1, a transform skip residual coding unit may be provided at a preceding stage of a Rice parameter derivation unit.

As described above, Non-Patent Literature 1 prescribes that the Rice parameter is always 1 in transform skip residual coding.

On the other hand, in the present embodiment, the correction unit 104d is used to derive a Rice parameter in transform skip residual coding, and therefore there is also a case where the Rice parameter is other than 1 in transform skip residual coding.

In the present embodiment, the Rice parameter may always be set to a value larger than 1 regardless of the output result by the correction unit 104d.

Alternatively, the correction unit 104d may be configured to output a post-correction Rice parameter according to the internal processing bit depth of the content.

For example, the correction unit 104d may be configured to output 4 as the post-correction Rice parameter in a case where the internal processing bit depth of the content is 12 bits, output 6 as the post-correction Rice parameter in a case where the internal processing bit depth of the content is 14 bits, and output 8 as the post-correction Rice parameter in a case where the internal processing bit depth of the content is 16 bits.

Alternatively, the correction unit 104d may be configured to output a post-correction Rice parameter determined on the image coding device 100 side and written in the stream.

According to the present embodiment, a Rice parameter according to transform skip residual coding can be derived in a video called screen content, and coding performance can be improved.

The image coding device 100 and the image decoding device 200 described above may be implemented as programs that cause a computer to execute respective functions (respective steps).

Note that the above described embodiments have been described by taking application of the present invention to the image encoding device 10 and the image decoding device 30 as examples. However, the present invention is not limited only thereto, but can be similarly applied to an encoding/decoding system having functions of the image encoding device 10 and the image decoding device 30.

INDUSTRIAL APPLICABILITY

According to the present embodiment, it is possible to improve the overall quality of service in video communications, thereby contributing to Goal 9 of the UN-led Sustainable Development Goals (SDGs) which is to "build resilient infrastructure, promote inclusive and sustainable industrialization and foster innovation".

REFERENCE SIGNS LIST

1 image processing system
100 image coding device
101, 203 inter-prediction unit
102, 204 intra-prediction unit
103 transform/quantization unit
104 entropy coding unit
104a local addition unit
104b transform unit
104c table reference unit
104d correction unit
105, 202 inverse transform/inverse quantization unit
106 subtraction unit
107, 205 addition unit
108, 206 in-loop filtering unit
109, 207 frame buffer
110 block division unit
111, 208 block integration unit
200 image decoding device
201 entropy decoding unit

## Claims

1. An image decoding device configured to decode coded data, the image decoding device comprising:

   a local addition unit that adds level values of decoded residual coefficients existing around a residual coefficient to be decoded and derives a sum total value of level;
   a transform unit that transforms the sum total value of level into an amount of shift and an index;
   a table reference unit that refers to a predefined table and outputs a pre-correction Rice parameter corresponding to the index; and
   a correction unit that derives a post-correction Rice parameter on the basis of the pre-correction Rice parameter and the amount of shift.

2. The image decoding device according to claim 1, wherein

   in a case where the sum total value of level is equal to or larger than a threshold value, the transform unit derives the amount of shift on the basis of an internal processing bit depth and derives the index on the basis of the sum total value of level and the amount of shift, and
   in a case where the sum total value of level is smaller than the threshold value, the transform unit outputs 0 as the amount of shift and outputs the sum total value of level as the index.

3. The image decoding device according to claim 1 or 2, wherein
   the correction unit is used to derive a Rice parameter in transform skip residual coding.

4. An image decoding method for decoding coded data, the image decoding method comprising:

   a step of adding level values of decoded residual coefficients existing around a residual coefficient to be decoded and deriving a sum total value of level;
   a step of transforming the sum total value of level into an amount of shift and an index;
   a step of referring to a predefined table and outputting a pre-correction Rice parameter corresponding to the index; and
   a step of deriving a post-correction Rice parameter on the basis of the pre-correction Rice parameter and the amount of shift.

5. A program for causing a computer to function as an image decoding device,
   wherein the image decoding device includes:

   a local addition unit that adds level values of decoded residual coefficients existing around a residual coefficient to be decoded and derives a sum total value of level;
   a transform unit that transforms the sum total value of level into an amount of shift and an index;
   a table reference unit that refers to a predefined table and outputs a pre-correction Rice parameter corresponding to the index; and
   a correction unit that derives a post-correction Rice parameter on the basis of the pre-correction Rice parameter and the amount of shift.

## FIG. 1

IMAGE PROCESSING SYSTEM 1

IMAGE CODING DEVICE 100

IMAGE DECODING DEVICE 200

FIG. 2

EP 4 250 728 A1

# FIG. 3

| 104a | | 104b | | 104c | | 104d |
|---|---|---|---|---|---|---|
| LOCAL ADDITION UNIT | → | TRANSFORM UNIT | → | TABLE REFERENCE UNIT | → | CORRECTION UNIT |

104

# FIG. 4

| locSumAbsIdx | 0 | 1 | 2 | 3 | 4 | 5 | 6 | 7 | 8 | 9 | 10 | 11 | 12 | 13 | 14 | 15 |
|---|---|---|---|---|---|---|---|---|---|---|---|---|---|---|---|---|
| cBaseRiceParam | 0 | 0 | 0 | 0 | 0 | 0 | 0 | 1 | 1 | 1 | 1 | 1 | 1 | 1 | 2 | 2 |
| locSumAbsIdx | 16 | 17 | 18 | 19 | 20 | 21 | 22 | 23 | 24 | 25 | 26 | 27 | 28 | 29 | 30 | 31 |
| cBaseRiceParam | 2 | 2 | 2 | 2 | 2 | 2 | 2 | 2 | 2 | 2 | 2 | 2 | 3 | 3 | 3 | 3 |

# FIG. 5

## INTERNATIONAL SEARCH REPORT

| International application No. |
|---|
| **PCT/JP2021/035556** |

**A.  CLASSIFICATION OF SUBJECT MATTER**

*H04N 19/13*(2014.01)i; *H04N 19/136*(2014.01)i; *H04N 19/18*(2014.01)i
FI:  H04N19/13; H04N19/136; H04N19/18

According to International Patent Classification (IPC) or to both national classification and IPC

**B.  FIELDS SEARCHED**

Minimum documentation searched (classification system followed by classification symbols)

H04N19/00-19/98

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C.  DOCUMENTS CONSIDERED TO BE RELEVANT**

| Category* | Citation of document, with indication, where appropriate, of the relevant passages | Relevant to claim No. |
|---|---|---|
| X | VAN, Luong Pham. RUSANOVSKYY, Dmytro. KARCZEWICZ, Marta. AHG12: On the Rice parameter derivation for high bit-depth coding. Joint Video Experts Team (JVET) of ITU-T SG 16 WP 3 and ISO/IEC JTC 1/SC 29. JVET-T0105_v2. 20th Meeting, by teleconference. October 2020, pp. 1-7<br>    1 Introduction, 2 Proposed methods | 1-2, 4-5 |
| Y | | 3 |
| Y | SARWER, Mohammed Golam. LIAO, Ruling. YE, Yan. LUO, Jiancong. CE3-1.5: Rice parameter derivation of transform skip residual coding. Joint Video Experts Team (JVET) of ITU-T SG 16 WP 3 and ISO/IEC JTC 1/SC 29/WG 11. JVET-Q0080-v3. 17th Meeting: Brussels, BE. January 2020, pp. 1-4<br>    1 Introduction, 2 Proposed method | 3 |
| A | BROWNE, Adrian. KEATING, Steve. SHARMAN, Karl. AHG12: Rice parameter selection for high bit depths. Joint Video Experts Team (JVET) of ITU-T SG 16 WP 3 and ISO/IEC JTC 1/SC 29. JVET-T0072. 20th Meeting, by teleconference. October 2020, pp. 1-15<br>    2 Algorithm description, 3 Simplification | 1-5 |

☑ Further documents are listed in the continuation of Box C.  ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |
| Date of the actual completion of the international search<br><br>**01 November 2021** | Date of mailing of the international search report<br><br>**16 November 2021** |
| Name and mailing address of the ISA/JP<br><br>**Japan Patent Office (ISA/JP)**<br>**3-4-3 Kasumigaseki, Chiyoda-ku, Tokyo 100-8915**<br>**Japan** | Authorized officer<br><br><br><br>Telephone No. |

Form PCT/ISA/210 (second sheet) (January 2015)

## INTERNATIONAL SEARCH REPORT

| | International application No. |
|---|---|
| | **PCT/JP2021/035556** |

### C. DOCUMENTS CONSIDERED TO BE RELEVANT

| Category* | Citation of document, with indication, where appropriate, of the relevant passages | Relevant to claim No. |
|---|---|---|
| P, X | KAWAMURA, Kei. UNNO, Kyohei. CE related: On Rice Parameter Derivation with Content Adaptation. Joint Video Experts Team (JVET) of ITU-T SG 16 WP 3 and ISO/IEC JTC 1/SC 29. JVET-U0062. 21st Meeting, by teleconference. December 2020, pp. 1-4 <br> 1 Problem Statement, 2 Proposed method | 1-2, 4-5 |
| P, X | RUSANOVSKYY, Dmytro. VAN, Luong Pham. COBAN, Muhammed. KARCZEWICZ, Marta. CE-1.1 and CE-1.2: On the Rice parameter derivation for high bit-depth coding. Joint Video Experts Team (JVET) of ITU-T SG 16 WP 3 and ISO/IEC JTC 1/SC 29. JVET-U0064. 21st Meeting, by teleconference. January 2021, pp. 1-12 <br> 1 Introduction, 2 Test CE-1.1 | 1-2, 4-5 |

Form PCT/ISA/210 (second sheet) (January 2015)